Europäisches Patentamt

European Patent Office

Office européen des brevets

(19)

(11) Publication number : 0 507 572 A1

(12) EUROPEAN PATENT APPLICATION

(21) Application number : 92302873.2

(22) Date of filing : 01.04.92

(51) Int. Cl.⁵ : F16L 1/12, F16L 1/22

(30) Priority : 03.04.91 GB 9106966

(43) Date of publication of application :
07.10.92 Bulletin 92/41

(84) Designated Contracting States :
BE DE DK FR IT LU NL

(71) Applicant : ADVANCED MECHANICS &
ENGINEERING LTD.
1 Huxley Road, Surrey Research Park
Guildford, Surrey GU2 5RE (GB)

(71) Applicant : Comex U.K. Ltd
Bucksburn House, Howes Road
Bucksburn, Aberdeen AB2 9RQ (GB)
(72) Inventor : Ellinas, Charalambos Prokopiou
106 Chichester Road
London N9 9DG (GB)
Inventor : Walker, Alastair Chalmers
34 Woodfield Hill
Coulsdon CR3 3EP (GB)

(74) Representative : Knott, Stephen Gilbert et al
MATHISEN, MACARA & CO. The Coach House
6-8 Swakeleys Road
Ickenham Uxbridge Middlesex UB10 8BZ (GB)

(54) Reeling systems for undersea pipe.

(57) A reeling system for laying under sea a continuous length of metal pipe (17) as a horizontal platform (10) on which is mounted a reel (14) carrying a pipe (17). The reel (14) is rotatable about a vertical axis (15) and the pipe (10) reeled off is led to a straightener (19). In order to maintain the pipe (10) aligned with the straightener (19) as it is reeled off, the platform (10) is movable in a vertical direction.

In addition, a control system (24) is provided which adjusts a reverse curvature applied by the straightener (19) in accordance with the radius of the pipe (10) on the reel (14). This ensures that the straightener (19) produces a straight pipe regardless of the difference in radius between the layers of pipe (10) on the reel (14).

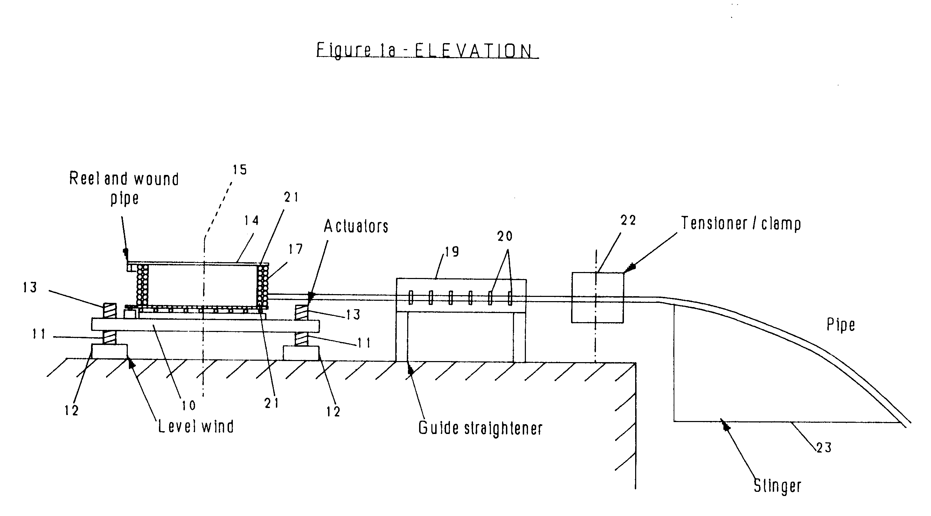

Figure.1a - ELEVATION

EP 0 507 572 A1

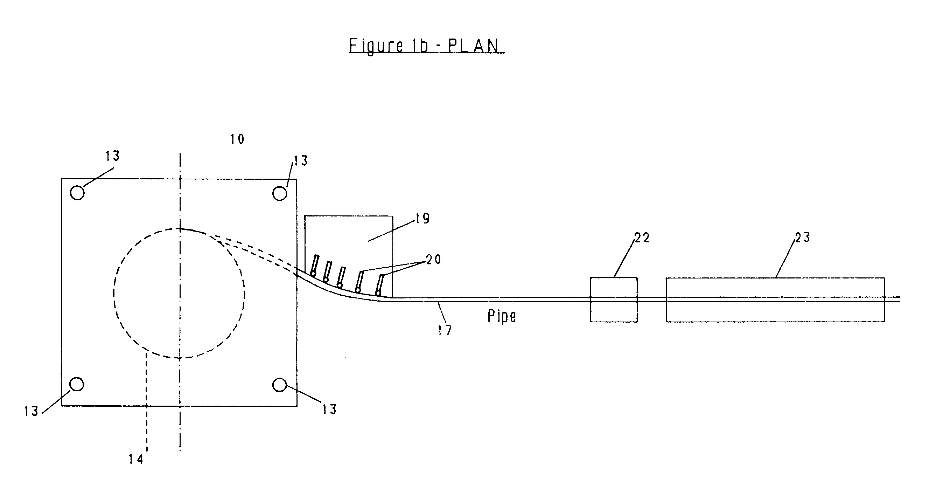

Figure 1b - PLAN

The invention relates to reeling systems for laying undersea a continuous length of metal pipe.

It has previously been proposed to lay such a pipe from specialist ships in which a reel carrying the pipe is mounted for rotation about a horizontal axis. Pipe reeled-off passes over a straightener to a stinger from which it is laid on the sea bed. The axis of the reel is fixed relative to the straightener and stinger.

This has the problem that, since the pipe is laid on the reel in a series of side-by-side axially spaced windings, the pipe is not always correctly aligned with the straightener and the stinger. This can induce lateral stresses in the pipe which are undesirable.

It is also a problem that, since the pipe is wound on the reel in a series of radially spaced layers, the residual curvature in the pipe as it is reeled off varies from layer to layer. Since the straightener applies only a constant straightening effect, this can result in the pipe not being fully straightened.

According to a first aspect of the invention, there is provided a reeling system for laying undersea a continuous length of metal pipe comprising a reel on which the pipe is wound in a series of side-by-side axially spaced windings, a horizontal platform on which the reel is mounted for rotation about a vertical axis normal to the platform and a device for guiding the pipe in a direction lying in a plane normal to the reel axis as the pipe is reeled off, the reel being so movable in a vertical direction along the rotational axis thereof that the pipe reels off the reel at a point lying in the guiding plane.

In this way, the pipe is not subject to lateral bending before it reaches the guide device. This means that the pipe will not be subject to variable unknown lateral stresses.

Preferably, the platform is moved to move the reel in a direction parallel to the axis. In this case, the platform may be mounted on some form of controllable actuators which are operated to effect said movement.

The axial movement of the reel may be controlled by feedback from a sensor which senses the position of the pipe along the reel axis as the pipe is reeled off.

According to a second aspect of the invention, there is provided a reeling system for laying undersea a continuous length of metal pipe comprising a reel on which the pipe is wound in a series of radially spaced layers of windings, and a guide straightener over which the pipe passes as the pipe is reeled off the reel, the guide straightener applying to the pipe in a plane normal to the reel axis a curvature in a sense opposite to the curvature of the pipe on the reel, the guide straightener being adjusted to vary the opposite curvature in accordance with variations in the curvature of the pipe as a result of the varying radii of the layers of the winding.

In this way, the system ensures that the pipe is always straight as it is laid on the sea bed.

The guide straightener is preferably controlled by a control system which receives a signal corresponding to the radius of the layers on the drum from which the pipe is being reeled off and which outputs a signal which operates the guide straightener to apply an opposite curvature in accordance with said radius signal.

The control system may also receive signals corresponding to the physical properties of the pipe, the geometry of the pipe and the load applied by the pipe to the guide straightener, the control system output signal being varied in accordance with variations in one or more of said signals.

The guide straightener preferably comprises a number of rollers arranged along the path of the pipe over the guide straightener, the axes of at least some of the rollers being movable by the control system to vary said curvature.

Preferably the curvature of the guide straightener is an arc of a circle, the radius of the arc being varied in accordance with variations in the curvature of the pipe and physical properties of the pipe and material.

The curvature defined by the guide straightener may be in accordance with the profiles described in GB-A-2224803.

The reeling system may include a platform and reel according to the first aspect of the invention.

In this case, and where a control system is provided, the control system may receive a signal corresponding to movement of the pipe out of said plane as the pipe is reeled off and issues a control signal which causes the required axial movement of the reel.

The reeling system may also include a tensioner located downstream of the guide straightener in the path of movement of the pipe as it is reeled off, the tensioner applying a force to the pipe in the direction of the pipe axis to produce a predetermined tension in the pipe.

In this case, and where a control system is provided, the tension applied by the tensioner may be adjustable, but the control system sensing the tension in the pipe between the reel and the tensioner and issuing a signal that adjusts the tension in the pipe to a required value.

The tensioner may be adjustable so as to prevent unreeling movement of the pipe.

The following is a more detailed description of some embodiments of the invention, by way of example, reference being made to the accompanying drawings in which:-

Figure 1a is a schematic side elevation of a reeling system for mounting on a ship and including a movable reel, a guide straightener, a tensioner and a stinger;

Figure 1b is a plan view from beneath of the reeling system of Figure 1a; and

Figure 2 is a view similar to Figure 1 but showing a control system for controlling the reeling system.

Referring first to Figures 1a and 1b, the reeling system comprises a platform 10 supported by a number of controlled actuators, two of which are shown at 11. Each actuator has a base 12 which stands on a level surface and may have a threaded portion 13 which is rotatable in both directions by a hydraulic system (not shown) to raise and lower the platform 10.

A reel 14 is mounted on the platform 10 with the reel axis extending vertically normal to the plane of the platform 10. The reel 14 is rotatable about this axis 15 by one or more hydraulic motor(s) I6 which drives gear wheel(s) (not shown) which engage(s) a rack or chain system (not shown) provided around the periphery of the reel 14.

The reel carries a metal pipe 17 in a series of radially spaced layers with each layer being formed by the series of side-by-side axially spaced windings.

The platform 10 and reel 14 are designed to be mounted on a ship without the ship requiring substantial modification.

Adjacent the reel 14 is a guide straightener 19 which, as seen in Figure 1b, includes a series of rollers 20 arranged with their axes parallel to the reel axis 15. The rims of the rollers 20 lie in a plane normal to the reel axis 15 (i.e. parallel to the plane of the platform 10) with this plane intersecting the reel 14 intermediate its flanges 21 in the position of the reel 14 shown in Figure la. The rollers 20-define a path for the pipe 17 which applies a reverse curvature to the pipe in a manner described in greater detail below.

Next in the path of the pipe 17 may be a tensioner 22, which grips the pipe 17 to apply to the pipe a positive or negative tension - i.e. a tension in addition to or opposite to the tension generated in the pipe 17 by the weight of the pipe 17 downstream of the tensioner 22. In this way, the tension in the pipe 17 can be maintained at a predetermined value to maintain the pipe in contact with the rollers 20. The tensioner 22 may be adjustable to such an extent that it will clamp the pipe to prevent movement of the pipe 17 (and so prevent unreeling of the pipe from the reel under the weight of unreeled pipe, after the reel 14 has been halted).

Tensioners performing this function are known per se and so will not be described in detail.

Finally in the path of the unreeling pipe, is a stinger 23. Again, such stingers are well known and will not be described in detail. The stinger 23 serves to guide the pipe 17 onto the sea bed.

In use, a ship carrying the system described above with reference to the drawings is positioned at the starting point for the laying of pipe 17. The pipe 17 is reeled off and fed to the guide straightener 19. The hydraulic screws 11 are adjusted so that the pipe 17 reels off the reel 14 at a point on the reel 14 that lies in the plane of the rollers 20 of the guide straightener 19. This means that the pipe 17 travels to the guide straightener 19 in a horizontal path so that no lateral bending moments are applied to the pipe 17.

The position of the platform 10 (and thus of the reel 14) may be adjusted manually or a sensor may be provided which senses the position of the pipe 17 being reeled off and controls the hydraulic screws accordingly. For example, the sensor may sense the axial position at which the pipe 17 leaves the reel 14 relative to the flanges 21 of the reel 14. Alternatively, the sensor may sense lateral stresses in the pipe 17 and adjust the reel 14 in such a way as to tend to reduce the stresses to zero.

The guide straightener 19 applies to the pipe 17 a curvature which is a reverse of the curvature imparted by the pipe 17 by the reel 14 such that the pipe 17 is delivered to the stinger 22 straight. The degree of reversed curvature required to straighten the pipe and the theory of this reverse curvature are discussed fully in GB-A-2224803 and reference is specifically made to that specification. The rollers 20 are arranged to define an arc whose radius $R_G$ is equal to the reverse curvature $R_r$ as defined in GB-A-2224803. Alternatively, the rollers 20 may define a radius $R_s$ also derived in accordance with the teachings of GB-A-2224803.

The pipe then passes through the tensioner 22 and over the stinger 23 to the sea bed.

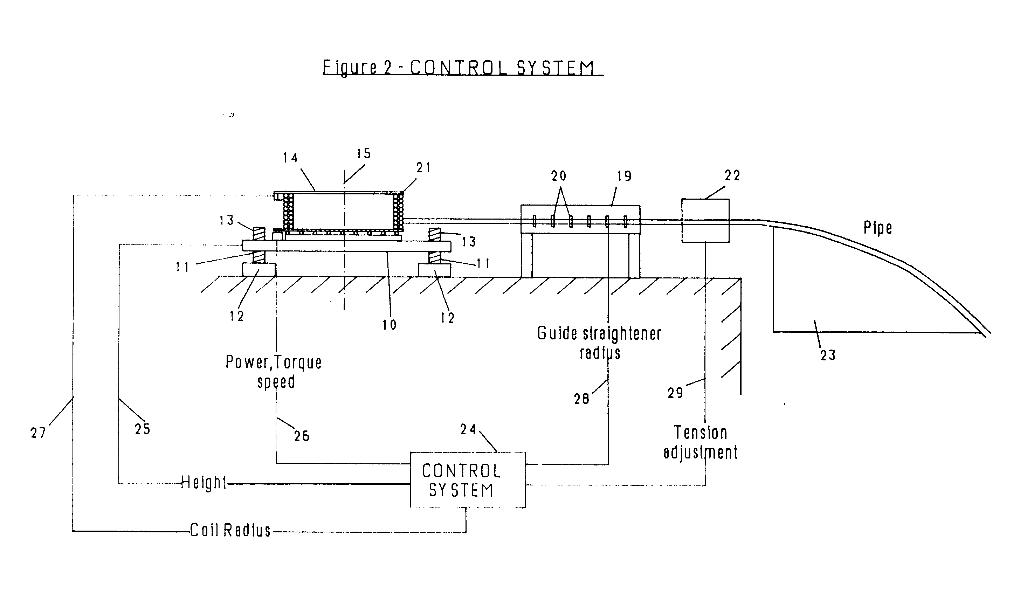

Referring next to Figure 2, this shows the reeling system of Figures 1a and 1b controlled by a control system 24. Parts common to Figures 1a and 1b and to Figure 2 will be given the same reference numerals and will not be described in detail.

In this embodiment, the axial position of the pipe 17 as it reels off is sensed and the signal corresponding to the position is fed to the control system 24 which in turn feeds a signal via line 25 to the actuators 11 to move the platform 10 as necessary to maintain the level position of the unreeled pipe 17 relative to the guide straightener 19. In addition, the control system 24 receives a signal corresponding to the velocity of the unreeling pipe 17 and feeds a signal via line 26 to the reel motor 16 to control the torque and speed of the motor 16 to produce a constant unreeling velocity in the pipe 17.

As described in GB-A-2224803, the radius $R_s$ depends, amongst other things, on the radius of curvature R to the pipe centre line. Since the pipe 17 is wound on the reel 14 in a series of radially spaced layers, this radius R will vary from layer to layer. Thus the reverse curvature $R_s$ required from the guide straightener 19 will also vary and the control system 24 deals with this in the following way.

The control system 24 receives a signal via line 27 representing the radius of curvature of the pipe 17 currently being unwound. The control system uses this signal to derive from functions stored in the control system 24 a required reverse curvature $R_G$ to be defined by the rollers 20. The derivation of this reverse curvature $R_s$ is described in GB-A-2224803.

The control system then outputs along line 28 a signal which controls the positions of the rollers 20 to define the required reverse curvature $R_s$ to ensure that the pipe 17 is delivered to the stinger 23 in a straight configuration.

The control system 24 will preferably also receive signals corresponding to other variable parameters in the formulae for deriving either $R_G$ or $R_s$ and will adjust the position of the rollers 20 in accordance with variations in such parameters. For example, the control system 24 may receive signals corresponding to the physical properties of the pipe, the geometry of the pipe and the load applied by the pipe to the rollers 20 and may adjust the reverse curvature applied by the rollers 20 in accordance with variations in these signals.

Variations in the defined roller curvature $R_s$ may necessitate variations in the tension required in the pipe between the reel 14 and the guide straightener 19. The control system 24 may thus sense when any such variation is necessary and apply an appropriate adjustment signal to the tensioner 22 via the line 29.

## Claims

1. A reeling system for laying undersea a continuous length of metal pipe comprising a reel on which the pipe is wound in a series of radially spaced layers of windings, and a guide straightener over which the pipe passes as the pipe is reeled off the reel, the guide straightener applying to the pipe in a plane normal to the reel axis a curvature in a sense opposite to the curvature of the pipe on the reel, the guide straightener being adjusted to vary the opposite curvature in accordance with variations in the curvature of the pipe as a result of the varying radii of the layers of the winding.

2. A reeling system according to claim 1 wherein the guide straightener is controlled by a control system which receives a signal corresponding to the radius of the layers on the drum from which the pipe is being reeled off and which outputs a signal which operates the guide straightener to apply an opposite curvature in accordance with said radius signal.

3. A reeling system according to claim 2 wherein the control system receives signals corresponding to the physical properties of the pipe, the geometry of the pipe and the load applied by the pipe to the guide straightener, the control system output signal being varied in accordance with variations in one or more of said signals.

4. A reeling system according to claim 2 or claim 3 wherein the guide straightener comprises a number of rollers arranged along the path of the pipe over the guide straightener, the axes of at least some of the rollers being movable by the control system to vary said curvature.

5. A reeling system according to any one of claims 1 to 4 wherein the curvature of the guide straightener is an arc of a circle, the radius of the arc being varied in accordance with variations in the curvature of the pipe and physical properties of the pipe and material.

6. A reeling system according to any one of claims 1 to 5 and including a platform and reel according to any one of claims 1 to 4.

7. A reeling system according to claim 6 and claim 2 wherein the control system receives a signal corresponding to movement of the pipe out of said plane as the pipe is reeled off and issues a control signal which causes the required axial movement of the reel.

8. A reeling system according to any one of claims 1 to 7 wherein a tensioner is located downstream of the guide straightener in the path of movement of the pipe as it is reeled off, the tensioner applying a force to the pipe in the direction of the pipe axis to produce a predetermined tension in the pipe.

9. A reeling system according to claim 8 when dependent on claim 2 wherein the tension applied by the tensioner is adjustable, the control system sensing the tension in the pipe between the reel and the tensioner and issuing a signal that adjusts the tension in the pipe to a required value.

10. A reeling system according to claim 8 or claim 9 wherein the tensioner is adjustable so as to prevent unreeling movement of the pipe.

11. A reeling system for laying undersea a continuous length of metal pipe comprising a reel on which the pipe is wound in a series of side-by-side axially spaced windings, a horizontal platform on which the reel is mounted for rotation about a vertical axis normal to the platform and a device for guiding the pipe in a direction lying in a plane normal to the reel axis as the pipe is reeled off, the reel being so movable in a vertical direction along the rotational axis thereof that the pipe reels off the reel at a point lying in the guiding plane.

12. A reeling system according to claim 11 wherein the platform is moved to move the reel in a direction parallel to the axis.

13. A reeling system according to claim 12 wherein the platform is mounted on controllable actuators which are operated to effect said movement.

14. A reeling system according to any one of claims 11 to 13 wherein the axial movement of the reel is controlled by feedback from a sensor which senses the position of the pipe along the reel axis as the pipe is reeled off.

Figure 1a - ELEVATION

Figure 1b - PLAN

10

13

13

19

20

13

13

22

23

17

Pipe

14

Figure 2 - CONTROL SYSTEM

EP 0 507 572 A1

| European Patent Office | EUROPEAN SEARCH REPORT | Application Number |
|---|---|---|

## DOCUMENTS CONSIDERED TO BE RELEVANT

EP 92302873.2

| Category | Citation of document with indication, where appropriate, of relevant passages | Relevant to claim | CLASSIFICATION OF THE APPLICATION (Int. Cl.5) |
|---|---|---|---|
| X | US - A - 3 965 713 (HORTON) * Totality * -- | 1,4,6, 8,11 | F 16 L 1/12 F 16 L 1/22 |
| X | GB - A - 2 070 724 (SANTA FE INTERNATIONAL) * Totality * -- | 1,4,8, 11 | |
| A | US - E - 30 846 (LANG) * Totality * -- | 1,5,8, 11 | |
| D,A | GB - A - 2 224 803 (ADVANCED MECHANICS & ENGINEERING LTD.) * Totality * ---- | 1,4,8, 11 | |

TECHNICAL FIELDS SEARCHED (Int. Cl.5)

F 16 L 1/00

The present search report has been drawn up for all claims

| Place of search | Date of completion of the search | Examiner |
|---|---|---|
| VIENNA | 10-06-1992 | SCHUGANICH |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

10